# EUROPÄISCHE PATENTSCHRIFT

(11) **EP 3 166 452 B1**
(45) Veröffentlichungstag und Bekanntmachung des Hinweises auf die Patenterteilung: **09.10.2019**
(21) Anmeldenummer: 15726173.6
(22) Anmeldetag: 03.06.2015
(51) Int. Cl.: A47J 31/44

(54) **VORRICHTUNG UND VERFAHREN ZUR ZUBEREITUNG EINES BRÜHGETRÄNKS**
APPARATUS AND METHOD FOR PREPARING A BREWED BEVERAGE
DISPOSITIF ET PROCÉDÉ DE PRÉPARATION D'UNE BOISSON INFUSÉE

(30) Priorität: 11.07.2014 DE 102014109761
(43) Veröffentlichungstag der Anmeldung: 17.05.2017
(73) Patentinhaber: Melitta Single Portions GmbH & Co. KG, 32425 Minden (DE)
(72) Erfinder: HESSELBROCK, Katrin, 49086 Osnabrück (DE); NEUHAUS, Sven, 32549 Bad Oeynhausen (DE); PAHNKE, Jan, 32427 Minden (DE); SCHANDL, Gerold, 32425 Minden (DE); KÖHLER, Robert, 64372 Ober-Ramstadt (DE); UNGERER, Markus, 64367 Mühltal (DE); WEBER, Thomas, 64367 Mühltal (DE)
(74) Vertreter: Dantz, Jan Henning
(86) Internationale Anmeldenummer: PCT/EP2015/062361
(87) Internationale Veröffentlichungsnummer: WO 2016/005112

(56) Entgegenhaltungen:
- EP-A1- 2 543 290
- EP-A1- 2 543 291
- FR-A1- 2 908 970

## Beschreibung

Die vorliegende Erfindung betrifft eine Vorrichtung zur Zubereitung eines Brühgetränks mit einer Einrichtung zum Erhitzen und Fördern von Wasser, einer Brühkammer, in die das erhitzte Wasser eingeleitet wird, wobei die Brühkammer, neben einem Einwurfschacht für Kapseln vorgesehen ist, einer Positioniereinrichtung zum Positionieren einer Kapsel mit einem Inhaltsstoff zum Brühen eines Getränks an einer seitlichen Öffnung der Brühkammer und einem Auslass mit einem schaltbaren Ventil an einer Unterseite der Brühkammer, sowie ein Verfahren zur Zubereitung eines Brühgetränks.

In der EP 2 159 167 ist eine Vorrichtung zur Herstellung eines Brühgetränkes offenbart worden, bei der die Kapsel benachbart zu einer Brühkammer angeordnet wird, in der das aufgebrühte Getränk eine gewisse Ziehzeit verweilen kann. Für den Brühvorgang wird die Kapsel an der Rückseite aufgestochen, und dann wird über eine Nadel Flüssigkeit in die Kapsel injiziert, die dann durch ein Sieb an einer Seite der Kapsel in die Brühkammer strömen kann. Diese Brühvorrichtung kann weitgehend drucklos arbeiten und auch zur Herstellung von Tee eingesetzt werden. Allerdings ist nachteilig, dass durch das Aufstechen der Kapsel diese beschädigt wird und bei einem gewissen Füllstand Leckageströme auftreten können. Zudem kann an der in die Kapsel ragenden Spitze Tee anhaften bleiben, der die Brühkammer für den nächsten Brühvorgang und damit den gebrühten Tee verunreinigt. Die Reinigung der Brühkammer über die Injektionsnadel ist schlecht möglich, da nur ein Teil der Brühkammer gespült werden kann.

Es ist daher Aufgabe der vorliegenden Erfindung, eine Vorrichtung und ein Verfahren zur Zubereitung eines Brühgetränks zu schaffen, bei dem auf effektive Weise auch Tee zubereitet werden kann und eine komfortable Bedienung gewährleistet wird.

Diese Aufgabe wird mit einer Vorrichtung mit den Merkmalen des Anspruches 1 und einem Verfahren mit den Merkmalen des Anspruches 11 gelöst.

Bei der erfindungsgemäßen Vorrichtung ist eine Antriebseinrichtung vorgesehen, mittels der die Brühkammer bewegbar ist. Der Benutzer kann nach dem Starten eines Brühvorganges abwarten, bis die Vorrichtung das Brühgetränk ausgibt, wobei die Vorrichtung automatisch die Parameter zur Zubereitung des Brühgetränks auswählen kann. Dabei können über die Antriebseinrichtung auf einfache Weise eine Dichtung mit der Kapsel und/oder ein Auswerfen der Kapsel erfolgen, ohne dass der Benutzer weitere Bedienschritte vornehmen muss. Nach dem Verfahren der Brühkammer kann diese automatisch gereinigt werden.

Vorzugsweise ist die Brühkammer relativ zu der Kapsel linear verfahrbar. Die Brühkammer kann dabei zwischen einer Einwurfposition, in der die Kapsel an einem Einwurfschacht zu der Brühkammer einwerfbar und benachbart zu der Öffnung positionierbar ist, einer Brühposition, an der ein Rand der Kapsel abgedichtet an der Öffnung der Brühkammer anliegt, und einer Auswurf- und Spülposition, an der die Kapsel von der Brühkammer gelöst ist, bewegbar sein. Die unterschiedlichen Positionen können automatisch über die Antriebseinrichtung angefahren werden.

Vorzugsweise ist ein Einfüllstutzen in der Brühposition oberhalb einer Durchführung zum Befüllen des Gefäßes angeordnet und in einer Spülposition beabstandet von der Durchführung oberhalb eines Leitelementes zum Sammeln der Spülflüssigkeit. Dadurch kann nach dem Brühvorgang automatisch ein Spülen durchgeführt werden, wobei verhindert wird, dass die Spülflüssigkeit in das Gefäß gelangt, das gegebenenfalls noch unterhalb der Durchführung angeordnet ist. Die Spülflüssigkeit wird aufgrund des Verfahrens der Brühkammer und des Einfüllstutzens automatisch über das Leitelement in einem Sammelbehälter eingefüllt. Dadurch kann auch kurze Zeit nach dem Brühvorgang ein automatisches Spülen erfolgen. Beim Spülen werden sämtliche mit Tee benetzten Teile, also insbesondere die Leitungen, Ventile und die Brühkammer gespült.

Für eine kompakte Bauweise können die Antriebseinrichtung und die Brühkammer auf gegenüberliegenden Seiten der Kapsel angeordnet sein. Die Antriebseinrichtung steht somit nicht zur Vorderseite der Vorrichtung hervor, an der das Gefäß nach der Zubereitung des Brühgetränks entnommen werden soll. Zudem können Haltemittel auf Zug belastet werden, was das Abdichten von Kapsel und Brühkammer erleichtert.

Für ein präzises Verfahren der Brühkammer kann die Antriebseinrichtung einen Elektromotor aufweisen, der eine Spindel oder eine Spindelmutter antreibt.

Auch andere Linearantriebe können zum Verfahren der Brühkammer eingesetzt werden.

In einer weiteren Ausgestaltung der Erfindung ist an einem Auslass der Brühkammer ein schaltbares Ventil und an einer Oberseite der Brühkammer ein Einlass zum Einleiten von heißem Wasser vorgesehen. Dadurch kann die Schwerkraft genutzt werden, um einerseits den Brühvorgang mit einer gewissen Ziehzeit innerhalb der Brühkammer, und einem automatischen Befüllen des darunter angeordneten Gefäßes zu gewährleisten und andererseits auch einen Spülvorgang durchzuführen, ohne dass Leckageströme aus dem Gerät auftreten. Bei dem Spülvorgang kann die seitliche Öffnung der Brühkammer oberhalb eines Sammelbehälters angeordnet sein, so dass bei einem Austreten von Spülflüssigkeit über die Öffnung diese unmittelbar in den Sammelbehälter geführt wird.

Erfindungsgemäß wird auch ein Verfahren zur Zubereitung eines Brühgetränkes gemäß dem Anspruch 11 bereitgestellt, wobei nach dem Brühvorgang ein Ventil nach einer Wartezeit geöffnet wird, beispielsweise nach mindestens 30 Sekunden oder nach einer Wartezeit von ein oder mehreren Minuten, und ein Gefäß mit dem Brühgetränk befüllt wird. Nach dem Brühvorgang wird die Kapsel mittels der Antriebseinrichtung ausgeworfen und ein automatischer Spülvorgang durchgeführt. Dadurch kann die Vorrichtung ein hohes Maß an Hygiene aufweisen, da ein Antrocknen von beispielsweise Tee verhindert wird und der Spülvorgang automatisiert unmittelbar nach dem Brühvorgang, spätestens 30 Sekunden nach dem Brühvorgang, durchgeführt werden kann.

Vorzugsweise ist benachbart zu der Brühkammer ein Anschlag vorgesehen, so dass durch das Verfahren der Brühkammer der Anschlag eingesetzt werden kann, um die Kapsel von einer Dichtung benachbart zu der seitlichen Öffnung der Brühkammer zwangsweise zu lösen, denn bei längeren Ziehzeiten kann es passieren, dass die Kapsel an der Dichtung anhaftet, so dass der Anschlag für ein zwangsweises Lösen sorgt.

Die Erfindung wird nachfolgend anhand eines Ausführungsbeispiels mit Bezug auf die beigefügten Zeichnungen näher erläutert. Es zeigen:

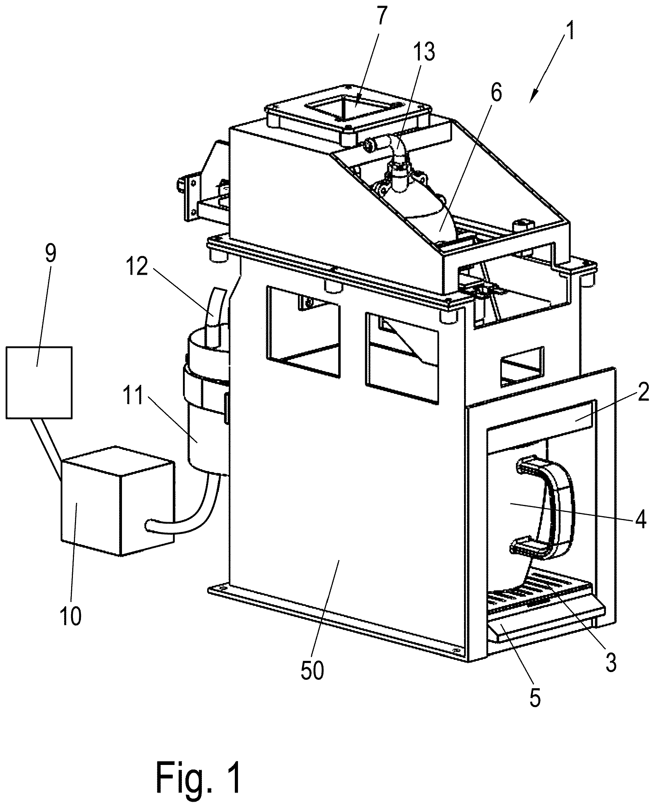

- Figur 1: eine perspektivische Ansicht einer Vorrichtung zur Zubereitung eines Brühgetränks;
- Figur 2: eine perspektivische Ansicht der Vorrichtung der Figur 1 ohne Gehäuse;
- Figur 3: Schnittdarstellung der Vorrichtung der Figur 1 ohne Gehäuse vor dem Einwurf der Kapsel;
- Figur 4: Schnittdarstellung der Vorrichtung der Figur 1 ohne Gehäuse beim Einwurf der Kapsel;
- Figur 5: Schnittdarstellung der Vorrichtung der Figur 1 mit der Kapsel in der Brühposition;
- Figur 6: Schnittdarstellung der Vorrichtung der Figur 1 nach dem Auswurf der Kapsel in einer Spülposition;
- Figur 7: eine perspektivische Detailansicht der Brühkammer der Vorrichtung der Figur 1 mit der Kapsel in der Brühposition;
- Figur 8: eine Aufsicht auf den Einwurfschacht der Vorrichtung der Figur 1;
- Figur 9: eine geschnittene perspektivische Ansicht der Kapsel, und
- Figur 10: eine geschnittene perspektivische Ansicht einer weiteren Ausführungsform der Kapsel.

Eine Vorrichtung 1 zur Zubereitung von Brühgetränken umfasst einen herausnehmbaren Sammelbehälter 2, der in einem Gehäuse 50 angeordnet ist. Der Sammelbehälter 2 besteht vorzugsweise aus zwei Teilen: einem Behälter mit wasserdurchlässigem Boden zum Auffangen von Kapseln und einem darunterliegenden Behälter zum Sammeln von Wasser. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Einwurfschacht 7 für Kapseln vorgesehen ist.

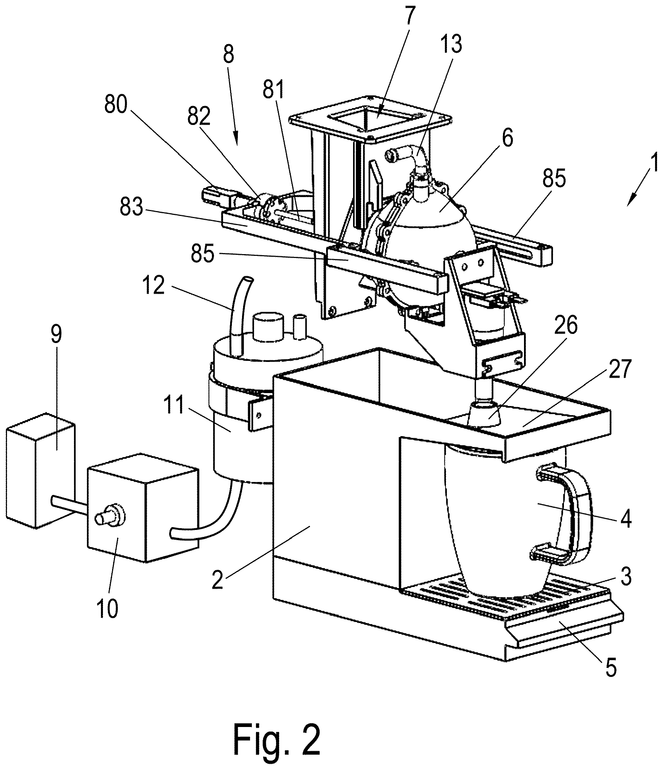

Wie in Figur 2 gezeigt ist, befindet sich der Einwurfschacht 7 für Kapseln zwischen der Brühkammer 6 und einer Antriebseinrichtung 8. Über die Antriebseinrichtung 8 kann die Brühkammer 6 relativ zu dem Einwurfschacht 7 verfahren werden. Hierfür ist ein Elektromotor 80 vorgesehen, der über ein Getriebe eine Spindel 81 antreibt, auf der eine Spindelmutter 82 drehfest gelagert ist. Durch Drehen der Spindel 81 werden mit der Spindelmutter 82 verbundene Arme 83 linear verfahren. Die Arme 83 umgreifen die Brühkammer 6 an gegenüberliegenden Seiten sind an linearen Führungen 85 geführt. Die Führung 85 kann beispielsweise als Nut oder Schiene ausgebildet sein. Die Brühkammer 6 ist dadurch linear bewegbar.

Die Vorrichtung 1 zur Zubereitung von Brühgetränken umfasst ferner einen schematisch dargestellten Tank 9 für Frischwasser, der abnehmbar ausgebildet sein kann. Der Tank 9 ist mit einer Pumpe 10 verbunden, über die eine Heizeinrichtung 11 in Form eines Boilers gespeist wird. Von der Heizeinrichtung 11 führt eine Leitung 12, die in Figur 2 nur teilweise dargestellt ist, zu einer Einlassleitung 13 oberhalb der Brühkammer 6. Zwischen der Einlassleitung 13 und dem Tank 9 kann optional auch ein Filter vorgesehen sein.

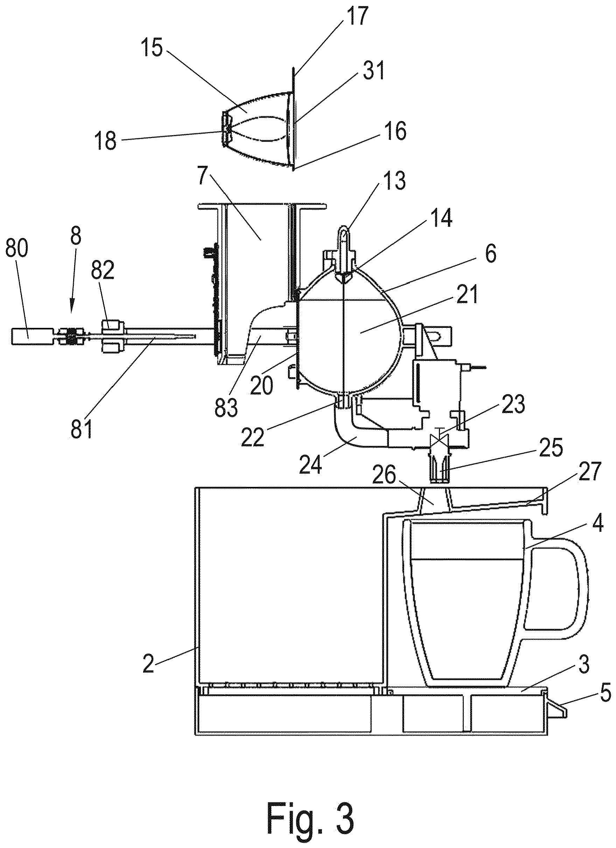

In Figur 3 ist die Vorrichtung 1 im Detail dargestellt. Oberhalb des Einwurfschachtes 7 ist eine Kapsel 15 vorgesehen, die topfförmig ausgebildet ist und an einer Seite eine Öffnung aufweist, die mit einem Sieb 31 verschlossen ist. Das Sieb 31 ist dabei an einem Rand 16 fixiert, der asymmetrisch ausgebildet ist und an einer Seite einen hervorstehenden Abschnitt 17 als Griffbereich aufweist. Durch ebenfalls asymmetrische Führungsmittel am Boden der Kapsel 15 wird diese dadurch in einer vorbestimmten Position und Ausrichtung in den Einwurfschacht 7 eingeworfen, der eine entsprechende Aussparung mit Führungsmitteln für die Positionierung der Kapsel 15 aufweist. Auf der zur Öffnung gegenüberliegenden Seite weist die Kapsel 15 einen Boden 18 auf, an dem Markierungen zur Identifizierung der Kapsel 15 angeordnet sind. Solche Markierungen können als Farbcodierung, optische Codierung, elektromagnetische Codierung oder sonst wie ausgebildet sein, um in einer vorbestimmten Position einen bestimmten Kapseltyp zu identifizieren. Durch ein Auslesen der Codierung der Kapsel 15 an der Vorrichtung kann über eine Steuerung die Füllmenge an heißem Wasser für die Brühkammer 6, die Temperatur und die Verweilzeit eingestellt werden. Auch die Steuerung anderer Parameter über die Codierung ist möglich.

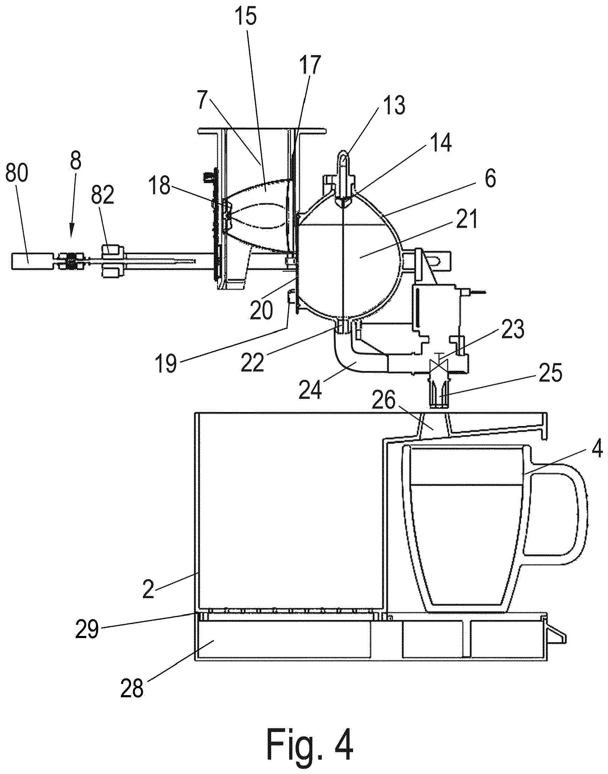

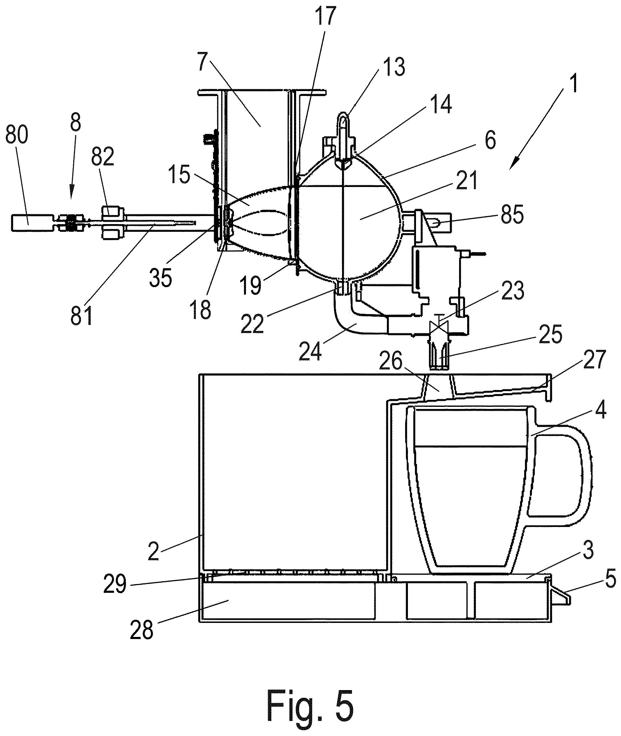

Für den Brühvorgang wird die Kapsel 15 zunächst in den Einwurfschacht 7 eingefügt, wie dies in Figur 4 gezeigt ist. Die Kapsel 15 gleitet nach unten, bis sie an einer seitlichen Öffnung 20 der Brühkammer 6 angeordnet ist. Hierfür sind an der Außenseite der Brühkammer 6 Halter 19 vorgesehen, die verhindern, dass die Kapsel 15 über die in Figur 5 gezeigte Position nach unten herausrutscht. In Figur 5 ist die Brühposition gezeigt, in die die Brühkammer 6 nach dem Einwerfen der Kapsel 15 verfahren wird. Hierfür wird über den Elektromotor 80 die Spindel 81 gedreht, um die Arme 83 entlang der Führung 85 in Figur 5 nach links zu verfahren, und um somit eine Dichtung benachbart zu der Öffnung 20 an der Brühkammer 6 gegen den Rand 16 der Kapsel 15 zu drücken und für eine Abdichtung zu sorgen. Die Kapsel 15 und ein Innenraum 21 der Brühkammer 6 bilden somit eine Einheit, wobei der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier mal so groß, so dass das Brühgetränk sich vorwiegend in der Brühkammer 6 befindet und nur ein kleinerer Teil in der Kapsel 15, was das Ausgeben des Brühgetränkes vereinfacht.

In der Brühposition wird nun über die Einlassleitung 13 heißes Wasser aus der Heizeinrichtung 11 in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht. Die Brühkammer 6 weist am unteren Ende einen Auslass 22 auf, der über eine Leitung 24 mit einem Ventil 23 verbunden ist. Durch Schließen des Ventils 23 wird das eingeleitete heiße Wasser in der Brühkammer 6 gesammelt und steigt über den Auslass 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk. Zudem kann über das Auslesen der Codierung ein Reinigungsprogramm oder ein Serviceprogramm gestartet werden.

Nach dem Brühvorgang kann das Ventil 23 geöffnet werden, damit das Brühgetränk aus der Brühkammer 6 über den Auslass 22, die Leitung 24 in einen Auslassstutzen 25 strömt, von dem es in ein Gefäß 4 eingeleitet wird. Zwischen dem Auslassstutzen 25 und dem Gefäß 4 befindet sich eine Durchführung 26 bzw. eine Öffnung, so dass das heiße Getränk ungehindert in das Gefäß 4 einströmen kann. Nach der Zubereitung des Brühgetränks kann das Ventil 23 wieder geschlossen werden.

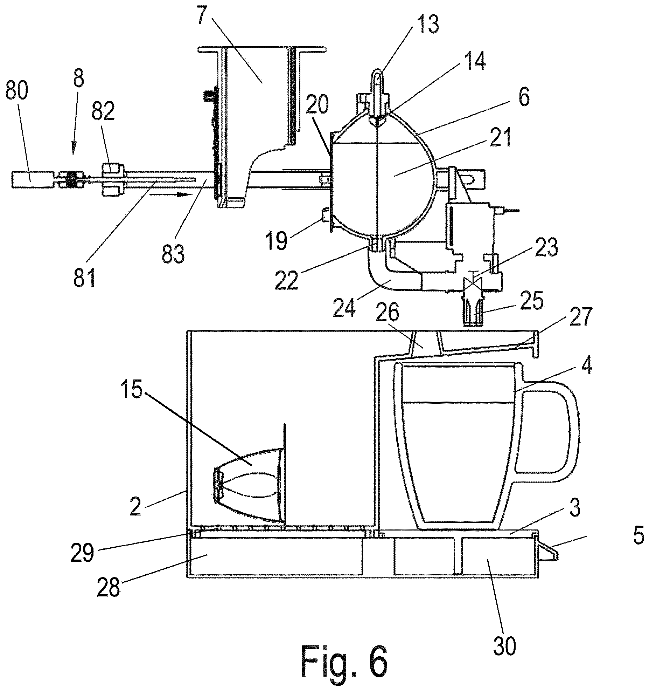

Nach dem Brühvorgang kann die Brühkammer 6 über die Antriebseinrichtung 8 entsprechend dem Pfeil in Figur 6 verfahren werden, so dass die Kapsel 15 aus der Halteposition benachbart zu der seitlichen Öffnung 20 an der Brühkammer 6 entfernt wird und nach unten herabfällt. Die Kapsel 15 fällt dabei in den Sammelbehälter 2 auf ein Sieb 29 oder ein Gitter, das oberhalb eines Sammelbeckens 28 angeordnet ist. Durch das Verfahren der Brühkammer 6 werden gleichzeitig auch die Leitung 24 und der Auslassstutzen 25 verfahren, der nun nicht mehr über der Durchführung 26, sondern über einem Leitelement 27 angeordnet ist. Nun kann die Brühkammer 6 gespült werden, indem heißes Wasser aus der Heizeinrichtung 11 über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Auslass 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in das Sammelbecken 28 des Sammelbehälters 2. Das Leitelement 27 kann statt als schräger Boden auch als Kanal oder Rinne ausgebildet sein.

Wird nach der Entnahme des Gefäßes 4 eine geringe Menge an Flüssigkeit durch den Durchlass 26 eingeleitet, kann diese Flüssigkeit in einem zweiten Sammelbecken 30 oder einer Tropfschale unterhalb des Siebes 31 gesammelt werden. Der Sammelbehälter 2 kann als Einheit aus dem Gehäuse 50 der Vorrichtung 1 entnommen werden, so dass die beiden Sammelbecken 28 und 30 an dem Sammelbehälter 2 entleert werden können. Zudem ist der Sammelbehälter 2 oberhalb des Siebes 29 abnehmbar, so dass auf einfache Weise auch die benutzten Kapseln 15 entleert werden können.

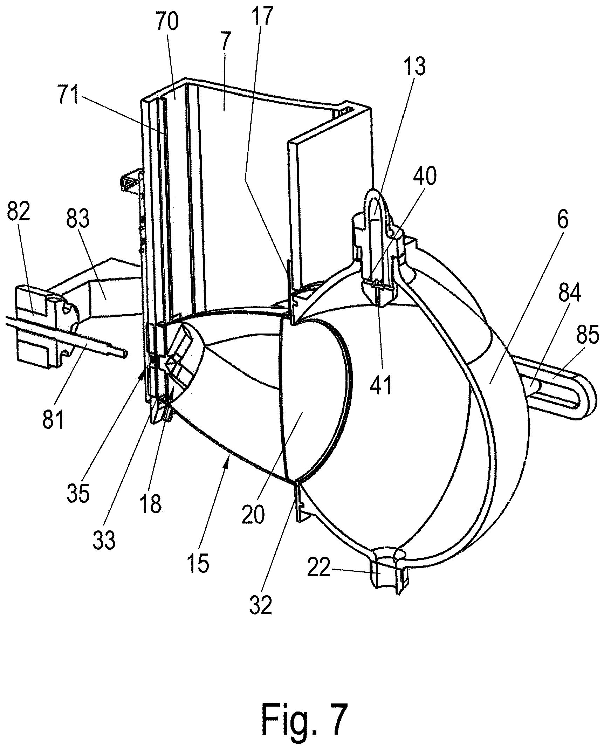

In Figur 7 ist die Brühkammer 6 im Detail dargestellt. An der Oberseite der Brühkammer 6 befindet sich die Düse 14, mittels der heißes Wasser für den Brühvorgang oder für den Spülvorgang eingeleitet wird. Die Düse 14 weist hierfür über den Umfang verteilt mehrere Öffnungen 40 auf, durch die das heiße Wasser in die Brühkammer 6 eingespritzt werden kann. Dadurch wird an den Seitenwänden der Brühkammer 6 ein Flüssigkeitsfilm gebildet, der einerseits zum Spülen und andererseits für den Brühvorgang genutzt werden kann. Zudem ist eine Öffnung 41 nach unten an der Düse 14 vorgesehen, durch die heißes Wasser eingespritzt werden kann, beispielsweise wenn heißes Wasser während des Brühvorganges nachgefüllt werden soll. Die Öffnungen 40 und 41 können dabei optional über Ventile schaltbar ausgebildet sein. Alternativ kann die Öffnung 41 auch nicht senkrecht nach unten, sondern in Richtung der Kapsel ausgeführt sein.

Die Brühkammer 6 ist im Wesentlichen kugelförmig ausgebildet und weist im oberen Bereich einen parabelförmigen Abschnitt auf, an dem die Düse 14 vorgesehen ist.

Die Brühkammer 6 besitzt an der Außenseite dabei Halter 84 oder Zapfen, die in der Führung 85 gelagert sind.

Die Brühkammer 6 kann ein Volumen zwischen 0,1 bis 1,0 l, insbesondere 0,15 l bis 0,7 l, aufnehmen, je nachdem, wie viele Portionen des Brühgetränks auf einmal zubereitet werden sollen.

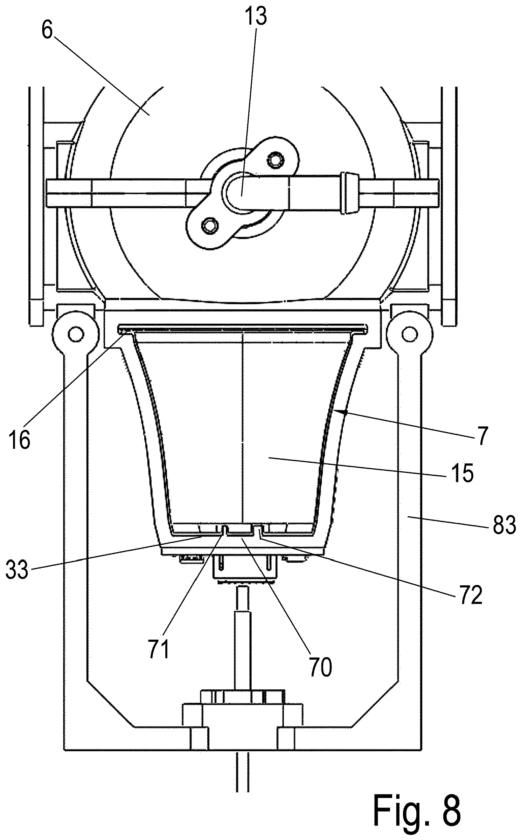

Ferner ist in den Figuren 7 und 8 zu sehen, dass der Einwurfschacht 7 auf der Seite des Bodens 18 der Kapsel 15 eine Fläche 70 aufweist, von der eine erste Führungsleiste 71 und eine zweite Führungsleiste 72 hervorstehen. Die Führungsleisten 71 und 72 weisen eine unterschiedliche Breite auf und sind zu einer Mittelebene der Kapsel 15 asymmetrisch ausgebildet, so dass die Kapsel 15 nur in einer vorbestimmten Position in den Einwurfschacht 7 eingeworfen werden kann.

Auf der Höhe der seitlichen Öffnung 20 ist benachbart zu dem Boden 18 der Kapsel 15 eine Bodenfläche 33 mit Nuten zur Aufnahme der Führungsleisten 71 und 72 vorgesehen, an der die Kapsel 15 nach dem Einwerfen abgestützt ist, wenn die Kapsel 15 an den Positionierungsmitteln 19 anliegt. In der Einwurfposition und der Brühposition wird somit verhindert, dass die Kapsel 15 in dem Einwurfschacht 7 herunterfallen kann. Wird die Brühkammer 6 nach dem Brühvorgang verfahren und von dem Einwurfschacht 7 entfernt, kann die Kapsel aufgrund der Schwerkraft nach unten in den Sammelbehälter 2 fallen. Hierbei kann es passieren, dass die Kapsel 15 mit dem Rand 16 an einer ringförmigen Dichtung 32 an der Brühkammer 6 anhaftet und mit der Brühkammer 6 gemeinsam verfahren wird. Damit eine Ablösung der Kapsel 15 sicher gewährleistet wird, kann in dem Verfahrweg der Kapsel ein Anschlag angeordnet sein, beispielsweise an dem nach oben ragenden Abschnitt 17, so dass die Kapsel 15 von der Brühkammer 6 nach einem bestimmten Verfahrweg gelöst wird und sichergestellt ist, dass die Kapsel 15 in den Sammelbehälter 2 herabfällt.

Durch die elektrische Antriebseinrichtung 8 ist sichergestellt, dass die Kapsel 15 automatisch ausgeworfen werden kann. Dadurch kann nach jedem Brühvorgang ein Spülvorgang eingeleitet werden, so dass verhindert wird, dass die Oberfläche der Brühkammer 6, des Auslasses 22 und der Leitung 24 verschmutzt. Das Spülen kann automatisch innerhalb von beispielsweise 30 Sekunden nach dem Brühvorgang durchgeführt werden, ohne dass der Benutzer den Spülvorgang auslösen muss.

Statt der gezeigten Antriebseinrichtung 8 mit der Spindel 81 können auch andere Antriebseinrichtungen eingesetzt werden, die die Brühkammer 6 linear bewegen oder auch verschwenken. Die Brühkammer 6 kann beispielsweise auch entlang einer Kurvenführung bewegt werden, um zwischen einer Einwurfposition, einer Brühposition und einer Auswurf- oder Spülposition bewegt zu werden.

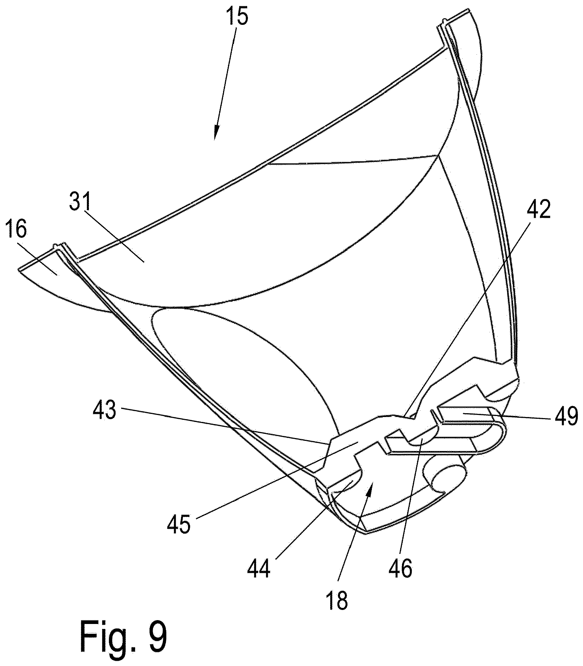

Die Kapsel 15 ist in Figur 9 im Schnitt gezeigt. Sie weist einen Innenraum auf, der über ein Sieb 31 oder ein Gitter verschlossen ist. Um das Aroma des Inhalts der Kapsel länger zu erhalten, kann das Sieb 31 oder das Gitter mit einer Abdeckfolie verschlossen sein, die dann vor dem Einwerfen in den Einwurfschacht 7 ganz oder teilweise entfernt wird. An dem gegenüberliegend angeordneten Boden 18 ist mindestens eine Einkoppelfläche 46, mindestens eine Lichtumlenkvorrichtungen 42 und 43 sowie mindestens eine Auskoppelfläche 44 vorgesehen, die für ein optisches Erkennungssystem eingesetzt werden. An dem Boden 18 sind hierfür Lichtleiter 45 ausgebildet. Ferner ist am Boden ein hervorstehendes Führungsprofil 49 ausgebildet, die mit den Führungsleisten 71 und 72 zusammenwirkt. In dem dargestellten Ausführungsbeispiel sind vier Auskoppelflächen 44 vorgesehen, an denen jeweils ein Lichtdetektor das Emittieren von Licht erfasst oder auch nicht erfasst. Dadurch ergeben sich am Boden 18 der Kapsel 15 vier Codierungen, so dass 16 unterschiedliche Kapseltypen erkannt werden können. Es ist natürlich auch möglich, die Anzahl der Auskoppelflächen 44 und Lichtdetektoren 36 zu variieren. Es ist auch möglich, die Lichtquellen und Lichtsensoren anders anzuordnen, so dass beispielsweise die Auskoppelflächen 44 zu Einkoppelflächen und die mittige Einkoppelfläche 46 zu einer Auskoppelfläche wird.

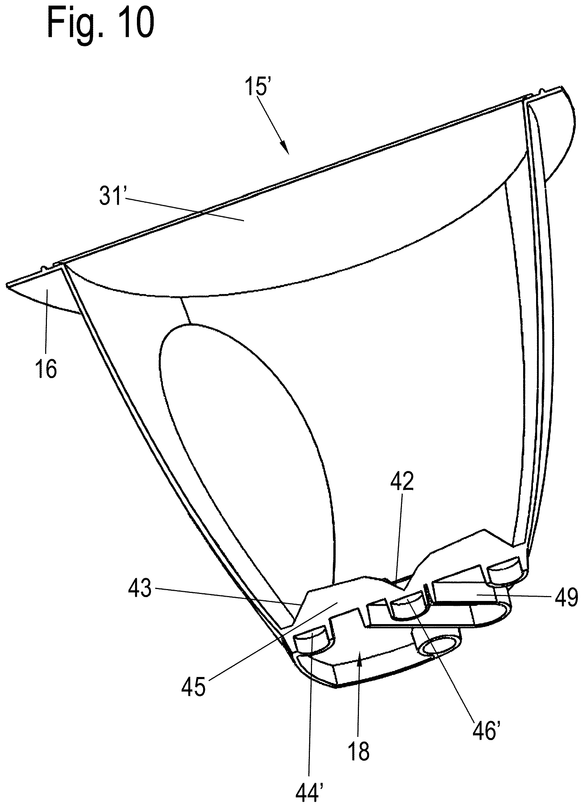

In Figur 10 ist eine gegenüber Figur 9 modifizierte Ausführungsform einer Kapsel 15' gezeigt. Die Kapsel 15' weist am Boden vier Auskoppelflächen 44' und eine Einkoppelfläche 46' auf, die jeweils in einer tassenförmigen Aufnahme geschützt angeordnet sind. Die parallel zur Fläche des Bodens 18 ausgerichteten Aus- und Einkoppelflächen 44' und 46' sind somit durch einen nach unten hervorstehenden Ring geschützt angeordnet. Ferner ist ein Sieb 31' an dem oberen Rand 16 der Kapsel 15' fixiert.

In dem dargestellten Ausführungsbeispiel ist die Brühkammer 6 einwandig ausgebildet, beispielsweise aus Kunststoff, Metall oder Glas. Es ist aber auch möglich, die Brühkammer 6 zur Erhöhung der Temperaturbeständigkeit zu isolieren, beispielsweise mit einer Umhüllung aus Isoliermaterial oder durch eine doppelwandige Ausbildung. Dann kann das Brühgetränk auch bei langen Ziehzeiten von beispielsweise über 5 Minuten ausreichend temperiert ausgegeben werden.

### Bezugszeichenliste

- 1: Vorrichtung
- 2: Sammelbehälter
- 3: Auflage
- 4: Gefäß
- 5: Griffabschnitt
- 6: Brühkammer
- 7: Einwurfschacht
- 8: Antriebseinrichtung
- 9: Tank
- 10: Pumpe
- 11: Heizeinrichtung
- 12: Leitung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Auslass
- 23: Ventil
- 24: Leitung
- 25: Auslassstutzen
- 26: Durchführung
- 27: Leitelement
- 28: Sammelbecken
- 29: Sieb
- 30: Sammelbecken
- 31: Sieb
- 32: Dichtung
- 33: Vorsprung
- 35: Lesegerät
- 40: Öffnung
- 41: Öffnung
- 42: Lichtumlenkvorrichtung
- 43: Lichtumlenkvorrichtung
- 44: Auskoppelfläche
- 45: Lichtleiter
- 46: Einkoppelfläche
- 49: Führungsprofil
- 50: Gehäuse
- 71: Führungsleiste
- 72: Führungsleiste
- 80: Elektromotor
- 81: Spindel
- 82: Spindelmutter
- 83: Arm
- 84: Halter
- 85: Führung

## Patentansprüche

1. Vorrichtung (1) zur Zubereitung eines Brühgetränks, umfassend:
a) eine Einrichtung (10, 11) zum Erhitzen und Fördern von Wasser;
b) eine Brühkammer (6), in die das erhitzte Wasser eingeleitet wird, wobei die Brühkammer (6), neben einem Einwurfschacht (7) für Kapseln vorgesehen ist;
c) eine Positioniereinrichtung (19) zum Positionieren einer Kapsel (15) mit einem Inhaltsstoff zum Brühen des Getränks an einer seitlichen Öffnung (20) der Brühkammer (6), und
d) einen Auslass (22) an einer Unterseite der Brühkammer (6),
**dadurch gekennzeichnet,**
**dass** eine Antriebseinrichtung (8) vorgesehen ist, mittels der die Brühkammer (6) bewegbar ist.

2. Vorrichtung nach Anspruch 1, **dadurch gekennzeichnet, dass** die Brühkammer (6) relativ zu der Kapsel (15) linear verfahrbar ist.

3. Vorrichtung nach Anspruch 1 oder 2, **dadurch gekennzeichnet, dass** die Brühkammer (6) zwischen einer Einwurfposition, in der die Kapsel (15) an einem Einwurfschacht (7) zu der Brühkammer (6) einwerfbar und an der seitlichen Öffnung der Brühkammer (6) positionierbar ist, einer Brühposition, an der ein Rand (16) der Kapsel (15) abgedichtet an der Öffnung (20) der Brühkammer (6) anliegt, und einer Auswerf- und Spülposition, an der die Kapsel (15) von der Brühkammer (6) entfernt ist, bewegbar ist.

4. Vorrichtung nach einem der vorhergehenden Ansprüche, **dadurch gekennzeichnet, dass** ein Einfüllstutzen (25) in der Brühposition oberhalb einer Durchführung (26) zum Befüllen des Gefäßes (4) angeordnet ist und in einer Spülposition beabstandet von der Durchführung (26) oberhalb eines Leitelementes (27) zum Sammeln der Spülflüssigkeit angeordnet ist.

5. Vorrichtung nach einem der vorhergehenden Ansprüche, **dadurch gekennzeichnet, dass** die Antriebseinrichtung (8) und die Brühkammer (6) auf gegenüberliegenden Seiten der Kapsel (15) angeordnet sind.

6. Vorrichtung nach einem der vorhergehenden Ansprüche, **dadurch gekennzeichnet, dass** die Antriebseinrichtung (8) einen Elektromotor (80) aufweist, der eine Spindel (81) oder Spindelmutter (82) antreibt.

7. Vorrichtung nach einem der vorhergehenden Ansprüche, **dadurch gekennzeichnet, dass** an einer Oberseite der Brühkammer ein Einlass zum Einleiten des heißen Wassers und an dem Auslass (22) ein schaltbares Ventil (23) vorgesehen ist.

8. Vorrichtung nach einem der vorhergehenden Ansprüche, **dadurch gekennzeichnet, dass** die seitliche Öffnung (20) oberhalb eines Sammelbehälters (2) angeordnet ist.

9. Vorrichtung nach Anspruch 8, **dadurch gekennzeichnet, dass** der Sammelbehälter (2) ein Gitter (29) oder Sieb aufweist, an dem gebrauchte Kapseln (15) oberhalb eines Sammelbeckens (28) für Flüssigkeit gesammelt werden.

10. Vorrichtung nach einem der vorhergehenden Ansprüche, **dadurch gekennzeichnet, dass** benachbart zu der Brühkammer (6) ein Anschlag vorgesehen ist, mittels dem beim Entfernen der Brühkammer (6) von einem Einwurfschacht (7) die Kapsel (15) von einer Dichtung (32) entfernt wird.

11. Verfahren zur Zubereitung eines Brühgetränks, mit den folgenden Schritten:
a) Positionieren einer Kapsel (15) mit einem Inhaltsstoff zum Brühen eines Getränks an einer seitlichen Öffnung (20) an der Brühkammer (6);
b) Erhitzen und Fördern von Wasser zu der Brühkammer (6);
c) Einlass des erhitzten Wassers in die Brühkammer (6);
d) Zubereiten des Getränks in der Brühkammer (6) unter Befüllung der Kapsel (15) mit dem erhitzten Wasser;
e) Öffnen eines Ventils nach einer Wartezeit und Befüllen eines Gefäßes (4) mit dem Brühgetränk, wobei
f) nach jedem Brühvorgang die Kapsel (15) ausgeworfen und ein automatischer Spülvorgang durchgeführt wird.

12. Verfahren nach Anspruch 11, **dadurch gekennzeichnet, dass** bei dem automatischen Spülvorgang die Brühkammer (6) in eine Spülposition verfahren wird und dann mit heißem Wasser durchspült wird.

13. Verfahren nach Anspruch 11 oder 12, **dadurch gekennzeichnet, dass** in der Spülposition ein Auslassstutzen (25) oberhalb eines Leitelementes (27) zu einem Sammelbehälter (2) angeordnet ist.

14. Verfahren nach einem der Ansprüche 11 bis 13, **dadurch gekennzeichnet, dass** über die Antriebseinrichtung (8) die Brühkammer (6) von einer Einwurfposition zu der Kapsel (15) in eine Brühposition bewegt wird und eine Dichtung (32) klemmend an einem Rand (16) der Kapsel (15) anliegt.

## Claims

1. An apparatus (1) for preparing a brewed beverage, comprising:
a) a device (10, 11) for heating and conveying water;
b) a brewing chamber (6) into which the heated water is introduced, whereby the brewing chamber (6) is arranged adjacent to an insertion chute (7) for capsules;
c) a positioning device (19) for positioning a capsule (15) with an ingredient for brewing a beverage at a lateral opening (20) of the brewing chamber (6), and
d) an outlet (22) on a bottom side of the brewing chamber (6);
**characterized in that** a drive device (8) is provided, by means of which the brewing chamber (6) can be moved.

2. An apparatus according to claim 1, **characterized in that** the brewing chamber (6) can be moved linearly relative to the capsule (15).

3. An apparatus according to claim 1 or 2, **characterized in that** the brewing chamber (6) can be moved between an insertion position in which the capsule (15) can be inserted in an insertion chute (7) into the brewing chamber (6) and can be positioned adjacent to the lateral opening of the brewing chamber (6), a brewing position on which an edge (16) of the capsule (16) rests in a sealed manner on the opening (20) of the brewing chamber (6), and an ejection and rinsing position where the capsule (15) is remote from the brewing chamber (6).

4. An apparatus according to one of the preceding claims, **characterized in that** a filler neck (25) is arranged in a brewing position above a passage (26) for filling the vessel (4) and in a rinsing position spaced from the passage (26) above a guide element (27) for collecting the rinsing liquid.

5. An apparatus according to one of the preceding claims, **characterized in that** the drive device (8) and the brewing chamber (6) are arranged on opposite sides of the capsule (15).

6. An apparatus according to one of the preceding claims, **characterized in that** the drive device (8) comprises an electric motor (80) which drives a spindle (81) or spindle nut (82).

7. An apparatus according to one of the preceding claims, **characterized in that** an inlet for introducing the hot water is provided on an upper side of the brewing chamber and a switchable valve (23) on the outlet (22).

8. An apparatus according to one of the preceding claims, **characterized in that** the lateral opening (20) is arranged above a collecting container (2).

9. An apparatus according to claim 8, **characterized in that** the collecting container (2) comprises a grate (29) or screen, on which used capsules (15) are collected above a collecting basin (28) for liquids.

10. An apparatus according to one of the preceding claims, **characterized in that** a stop is provided adjacent to the brewing chamber (6), by means of which the capsule (15) can be removed from a seal (32) when the brewing chamber (6) is moved away from an insertion chute (7).

11. A method for preparing a brewed beverage, comprising the following steps:
a) positioning a capsule (15) with an ingredient for brewing a beverage at a lateral opening (20) on the brewing chamber (6);
b) heating and conveying water to the brewing chamber (6);
c) introduction of the heated water into the brewing chamber (6);
d) preparation of the beverage in the brewing chamber (6) by filling the capsule (15) with heated water;
e) opening a valve after a brewing time and filling a vessel (4) with the brewed beverage, wherein
f) the capsule (15) is ejected after each brewing process and an automatic rinsing process is carried out.

12. A method according to claim 11, **characterized in that** during the automatic rinsing process the brewing chamber (6) is moved to a rinsing position and is then rinsed with hot water.

13. A method according to claim 11 or 12, **characterized in that** in the rinsing position an outlet nozzle (25) is arranged above a guide element (27) to a collecting container (2).

14. A method according to one of the claims 11 to 13, **characterized in that** the brewing chamber (6) is moved via the drive device (8) from an insertion position for the capsule (15) to a brewing position, and a seal (32) rests on an edge (16) of the capsule (15) in a clamping manner.

## Revendications

1. Dispositif (1) pour préparer une boisson infusée comprenant :
a) une installation (10, 11) pour chauffer et transférer de l'eau,
b) une chambre à infuser (6) dans laquelle on introduit l'eau chaude, la chambre à infuser (6) étant à côté d'une trémie (7) à capsule,
c) une installation de positionnement (19) pour positionner une capsule (15) avec un contenant pour infuser la boisson, sur une ouverture latérale (20) de la chambre à infuser (6), et
d) une sortie (22) dans le côté inférieur de la chambre à infuser (6),
dispositif **caractérisé en ce qu'**il comporte
une installation d'entraînement (8) pour déplacer la chambre à infuser (6).

2. Dispositif selon la revendication 1,
**caractérisé en ce que**
la chambre à infuser (6) est mobile linéairement par rapport à la capsule (15).

3. Dispositif selon la revendication 1 ou 2,
**caractérisé en ce que**
la chambre à infuser (6) est mobile entre :
- une position d'entrée dans laquelle la capsule (15) peut être jetée dans une trémie d'entrée (7) vers la chambre à infuser (6) et être positionnée contre l'ouverture latérale de la chambre à infuser (6),
- une position d'infusion dans laquelle le bord (16) de la capsule (15) est appliqué de manière étanche contre l'ouverture (20) de la chambre à infuser (6), et
- une position d'éjection et de rinçage dans laquelle la capsule (15) est enlevée de la chambre à infuser (6).

4. Dispositif selon l'une des revendications précédentes,
**caractérisé en ce qu'**
un embout de remplissage (25) est en position d'infusion au-dessus d'un passage (26) pour remplir le récipient (4) et en position de rinçage, écarté du passage (26) il est au-dessus d'un élément de guidage (27) pour collecter le liquide de rinçage.

5. Dispositif selon l'une des revendications précédentes,
**caractérisé en ce que**
l'installation d'entraînement (8) et la chambre à infuser (6) sont sur les côtés opposés de la capsule (15).

6. Dispositif selon l'une des revendications précédentes,
**caractérisé en ce que**
l'installation d'entraînement (8) comprend un moteur électrique (80) entraînant une broche (81) ou un écrou de broche (82).

7. Dispositif selon l'une des revendications précédentes,
**caractérisé en ce que**
le côté supérieur de la chambre à infuser comporte une entrée pour introduire l'eau chaude et la sortie (22) comporte une soupape commandée (23).

8. Dispositif selon l'une des revendications précédentes,
**caractérisé en ce que**
l'ouverture latérale (20) est au-dessus d'un réceptacle collecteur (2).

9. dispositif selon la revendication 8,
**caractérisé en ce que**
le réceptacle collecteur (2) pour collecter les capsules utilisées (15) comporte une grille (29) ou un tamis au-dessus d'un récipient collecteur (28) pour le liquide.

10. Dispositif selon l'une des revendications précédentes,
**caractérisé en ce qu'**
au voisinage de la chambre à infuser (6) il est prévu une butée qui enlève le joint (32) lorsqu'on écarte la chambre à infuser (6) de la trémie d'entrée (7), la capsule (15).

11. Procédé pour préparer une infusion comprenant les étapes suivantes :
a) positionner une capsule (15) avec un contenant pour infuser une boisson, contre une ouverture latérale (20) de la chambre à infuser (6),
b) chauffer et transférer de l'eau dans la chambre à infuser (6),
c) faire entrer l'eau chaude dans la chambre à infuser (6),
d) préparer la boisson dans la chambre à infuser (6) en remplissant la capsule (15) avec de l'eau chaude,
e) ouvrir une soupape après un temps d'attente et remplir un récipient (4) avec l'infusion,
et selon lequel,
f) après chaque opération d'infusion, on éjecte la capsule (15) et on effectue une opération de rinçage automatique.

12. Procédé selon la revendication 11,
**caractérisé en ce que**
lors de l'opération de rinçage automatique, la chambre à infuser (6) est mise dans une position de rinçage et elle est rincée avec de l'eau chaude.

13. Procédé selon la revendication 11 ou 12,
**caractérisé en ce qu'**
en position de rinçage, un ajutage de sortie (25) vient au-dessus d'un élément de guidage (27) vers un réceptacle de collecteur (2).

14. Procédé selon l'une des revendications 11 à 13,
**caractérisé en ce que**
l'installation d'entraînement (8) déplace la chambre à infuser (6) d'une position d'entrée vers la capsule (15) à une position d'infusion et un joint (32) est appliqué de façon serrée contre le bord (16) de la capsule (15).
